# FASCICULE DE BREVET EUROPEEN

(11) **EP 0 814 253 B1**
(45) Date de publication et mention de la délivrance du brevet: **20.08.2003**
(21) Numéro de dépôt: 97401407.8
(22) Date de dépôt: 19.06.1997
(51) Int. Cl.: F02K 1/12

(54) **Tuyère d'éjection de turboréacteur, à géométrie variable**
Düse mit veränderlichem Strahlquerschnitt für Strahltriebwerke
Variable area nozzle for jet engine

(30) Priorité: 20.06.1996 FR 9607666
(43) Date de publication de la demande: 29.12.1997
(73) Titulaire: Snecma Moteurs, 75015 Paris (FR)
(72) Inventeur: Bouiller, Philippe Pierre Vincent, 77210 - Samoreau (FR); Bourquin, Pierre Yves, 75015 - Paris (FR); Jourdain, Gérard Ernst André, 91250 - Saintry (FR); Ruis, Jean-Pierre, 77820 - Le Chatelet en Brie (FR)

(56) Documents cités:
- EP-A- 0 091 786
- EP-A- 0 299 832
- FR-A- 2 714 422
- FR-A- 2 715 192
- FR-A- 2 724 977
- GB-A- 2 254 377
- US-A- 2 969 189
- US-A- 4 141 501

## Description

La présente invention concerne une tuyère d'éjection de turboréacteur, à géométrie variable, comportant une couronne extérieure de volets et une couronne intérieure de volets, la couronne intérieure de volets comprenant deux groupes de volets dans le prolongement les uns des autres et articulés à leur jonction, les volets amont de la couronne intérieure étant en outre articulés à leur extrémité antérieure sur la partie terminale fixe du turboréacteur, et les volets de la couronne extérieure étant articulés à leur extrémité antérieure sur une structure radialement distante de ladite partie terminale fixe, ladite couronne extérieure et chacun desdits groupes de volets comportant une série de volets commandés et une série de volets suiveurs, dans lequel les volets commandés amont sont reliés à un anneau de commande mobile axialement sous l'action d'une pluralité d'organes de commande interposés entre la partie fixe du turboréacteur et ledit anneau de commande.

Certains avions équipés de turboréacteurs peuvent assurer des missions en conditions de vol subsonique et supersonique. Dans ce cas, les turbomachines sont dotées d'un système de réchauffe et d'une tuyère à section variable. Cette dernière peut être de type axisymétrique ou autre.

La présente invention concerne les tuyères axisymétriques, à géométrie variable, pouvant recevoir une configuration convergente-convergente convenant aux écoulements subsoniques et une configuration convergente-divergente convenant aux écoulements supersoniques.

Le mode de fonctionnement convergent-divergent optimise le niveau de performance de la tuyère et permet un gain de poussée lorsque le dispositif de réchauffe est en fonctionnement.

Dans le mode de fonctionnement convergent-convergent, la tuyère est fermée au maximum et les séries de volets forment deux cônes convergents successifs. Cet état est avantageux lorsque la turbomachine fonctionne à un régime intermédiaire entre le ralenti et le plein gaz sec. On améliore la poussée ou la consommation spécifique par rapport à une turbomachine qui ne possède que le premier mode de fonctionnement.

Enfin, dans une tuyère à géométrie variable, on réduit la section géométrique nécessaire pour permettre le passage d'un débit donné, sous des conditions données de pression et de température, du flux de gaz traversant la tuyère.

FR-A-2 698 409 décrit une tuyère à géométrie variable du type mentionné ci-dessus dans laquelle les volets commandés de la couronne extérieure sont reliés à l'anneau de commande par des moyens par came et les volets commandés aval sont reliés par des biellettes à la structure de capotage, cette dernière étant mobile axialement afin d'assurer toutes les configurations de la tuyère. Il y a donc deux commandes séparées et deux boucles d'asservissement.

FR-A-1 225 736 et FR-A-1 588 791 concernent également des tuyères avec trois jeux de volets et deux commandes séparées.

La présence de deux commandes séparées entraîne une complexité de réalisation et une augmentation de masse.

On connaît par FR-A-2715192 une tuyère où l'anneau de commande est relié aux volets commandés aval par des leviers d'asservissement et les volets de la couronne extérieure sont articulés sur une structure fixe par rapport à la partie fixe de turboréacteur, une transmission à cames et galets déplaçant les volets amont.

EP-A-0 091 786 décrit un mécanisme de tuyère comportant un élément annulaire sur lequel sont articulés une première série de volets primaires, les leviers d'asservissement d'une seconde série de volets primaires et une troisième série de volets extérieurs.

FR A-2724977 décrit une tuyère où les leviers de commande associés aux vérins et aux volets sont articulés sur la structure fixe.

Le but de la présente invention est de proposer une tuyère à géométrie variable dans laquelle les trois jeux de volets sont actionnés par une seule commande, ce qui permet d'assurer un gain de masse et de coût.

L'invention atteint son but par le fait que l'anneau de commande est relié aux volets commandés amont par des leviers translatables articulés à l'une de leurs extrémités sur les organes de commande, et par le fait que les volets commandés de la couronne extérieure sont reliés aux leviers d'asservissement par des biellettes.

Grâce à cette disposition, l'ensemble des trois jeux de volets est commandés uniquement par le déplacement axial de l'anneau de commande. L'anneau de commande assure la synchronisation des organes de commande. En outre, il est autocentré par les volets aval de la couronne intérieure.

Enfin, l'usage des leviers translatables fait diminuer les efforts dans le mécanisme, ce qui permet d'utiliser des organes de commande de plus petite dimension, ces organes de commande étant par exemple constitués de vérins hydrauliques, alimentés par une plus petite pompe d'alimentation.

Avantageusement l'anneau de commande a une forme polygonale et les articulations des leviers d'asservissement sur ledit anneau de commande sont en appui sur les sommets dudit anneau de commande.

Cette forme polygonale évite les déformations de l'anneau par flexion.

D'autres avantages et caractéristiques de l'invention ressortiront à la lecture de la description suivante, faite à titre d'exemple et en référence aux dessins annexés dans lesquels :
- la figure 1 représente une demi-vue schématique, en coupe par un plan passant par l'axe de rotation de la turbomachine d'une tuyère d'éjection axisymétrique, à géométrie variable, conforme à l'invention, dans la configuration pleine ouverte.
- la figure 2 représente la tuyère d'éjection de la figure 1 dans une configuration intermédiaire convergente-divergente.
- la figure 3 montre la même tuyère d'éjection dans la configuration convergente-convergente.
- la figure 4 montre la courbe représentative de la section de sortie de la tuyère en fonction de la section de sortie des volets amont.

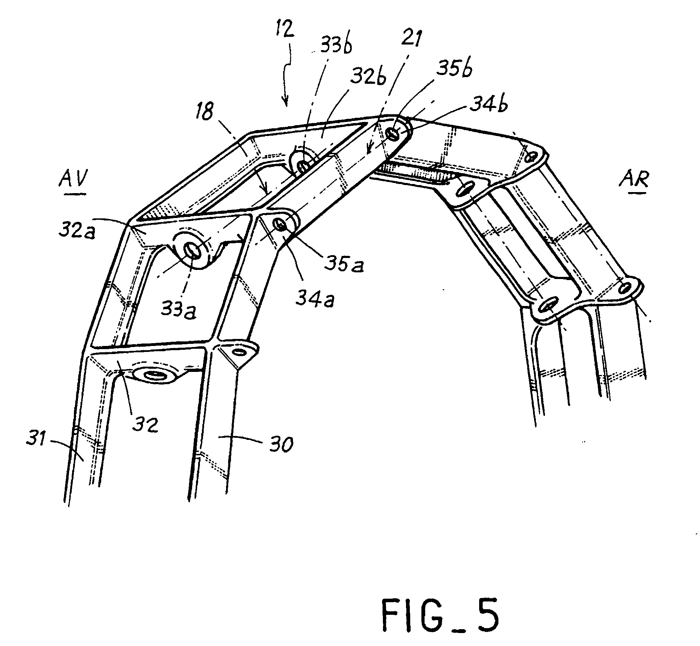

- la figure 5 est une représentation en perspective d'une portion de l'anneau de commande selon la présente invention.
- la figure 6 montre en perspective un levier translatable.

La présent invention concerne une tuyère axisymétrique 1, d'axe 2, à géométrie variable, disposée dans la partie terminale 3 d'un turboréacteur.

Cette tuyère 1 présente trois jeux de volets, constitués chacun d'une pluralité de volets commandés et d'une pluralité de volets suiveurs intercalés entre les volets commandés, et formant deux couronnes de volets coaxiaux.

La couronne intérieure est disposée à la suite de la tuyère d'éjection 4 des gaz de la turbine ou de la chambre de réchauffe, et comporte deux groupes de volets dans le prolongement les uns des autres, ces groupes de volets étant appelés ci-après le groupe des volets amont et le groupe des volets aval.

La couronne extérieure de volets entoure la couronne intérieure et est disposée dans le prolongement d'un carénage 5 entourant la tuyère d'éjection 4.

Les volets 6 de la couronne extérieure sont articulés à leur extrémité antérieure sur des axes d'articulation 7 fixes par rapport à la tuyère d'éjection 4.

Les volets amont 8 de la couronne intérieure sont articulés, à leur extrémité antérieure, sur des axes d'articulation 9 prévues dans la partie terminale de la tuyère d'éjection 4, et les volets aval 10 sont articulés à leur extrémité antérieure sur les extrémités postérieures des volets amont 8 au moyen des axes d'articulation 11.

Selon la présente invention, la géométrie des trois jeux de volets 6, 8, 10 est définie par la position axiale d'un anneau de commande 12, d'axe 2 disposé dans l'espace annulaire 13 séparant le groupe des volets amont 8 et la couronne extérieure de volets 6, et mobile axialement sous l'action d'une pluralité de vérins de commande 14 prenant appui en 15 sur la partie terminale du turboréacteur.

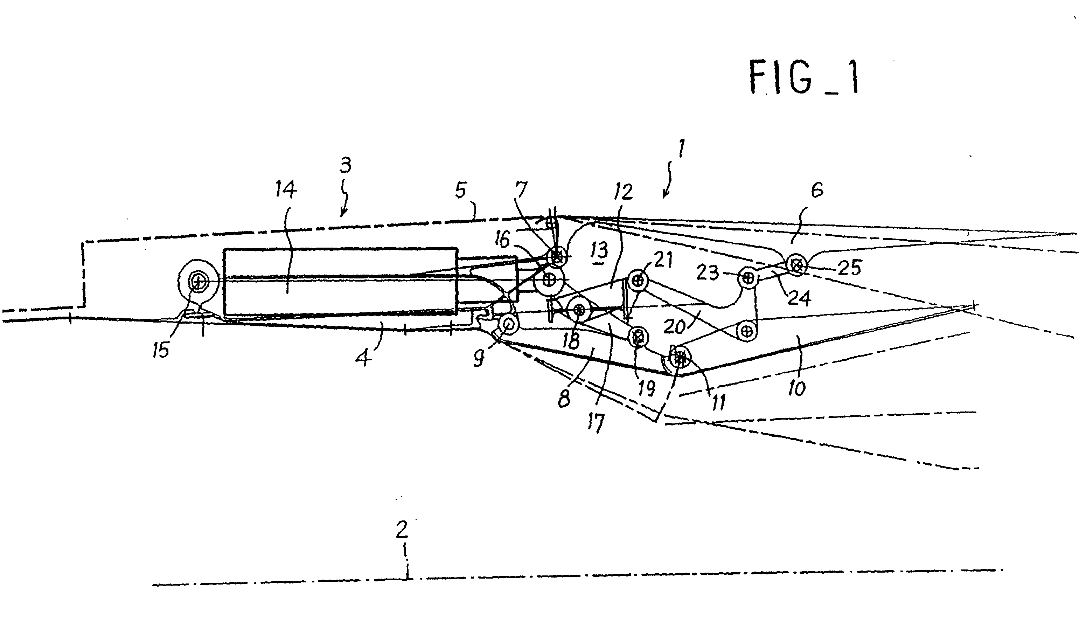

Ainsi qu'on le voit clairement sur les figures 1, 2 et 3, les tiges 15 des vérins de commande 14 sont articulées en 16 à l'extrémité extérieure de leviers translatables 17, qui relient les volets commandés amont 8 à l'anneau de commande 12. Les références 18 et 19 représentent respectivement les axes d'articulation des leviers translatables 17 sur l'anneau de commande 12 et sur les volets commandés amont 8.

Chaque volet commandé aval 10 est relié à l'anneau de commande 12. par un levier d'asservissement 20, qui présente trois axes d'articulation 21,22,23 parallèles et non coplanaires.

La référence 21 représente l'axe d'articulation d'un levier d'asservissement 20 sur l'anneau de commande 12 et la référence 22 représente l'axe d'articulation du même levier d'asservissement 20 sur le volet commandé aval 10.

Au moins une biellette 24 relie un levier d'asservissement 20 à un volet commandé 6 de la couronne extérieure. Cette biellette 24 est articulée en 23 sur le levier d'asservissement 20 et en 25 sur le volet commandé 6 de la couronne extérieure.

Les trois jeux de volets 6, 8, 10 comportent le même nombre de volets commandés et de volets suiveurs, et le nombre de vérins 14 est égal au nombre de volets commandés de chaque jeu. De plus chaque vérin 14 agit sur un seul levier translatable 17 reliant un seul volet commandé amont 8 à l'anneau de commande 12.

Grâce à la cinématique définie ci-dessus, la géométrie des trois jeux de volets 6, 8, 10 et la section de la tuyère varie en fonction de la position de l'anneau de commande 12, c'est-à-dire, en fonction de la course des vérins 14. L'anneau de commande 12 assure la synchronisation des vérins 14.

La figure 1 représente la position convergente-divergente de la couronne intérieure lorsque les tiges 15 des vérin 14 sont rentrées au maximum. Cette position correspond au régime supersonique plein ouvert, lorsque la chambre de réchauffe est au régime plein gaz.

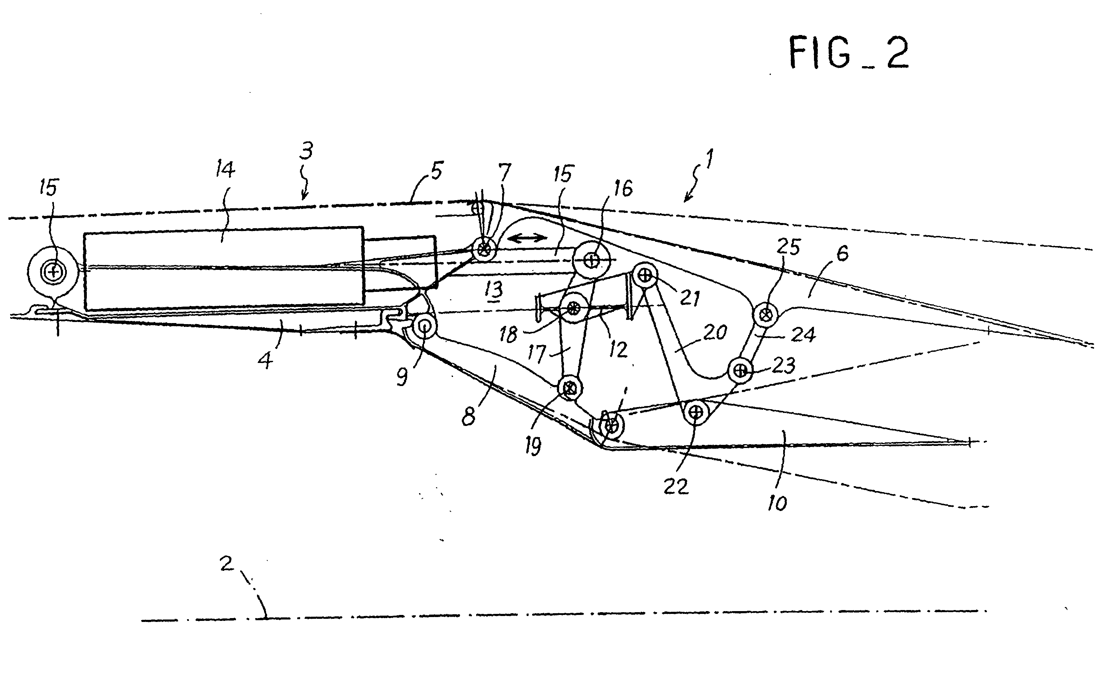

La figure 2 montre une configuration intermédiaire convergente-divergente de la couronne intérieure, la section de sortie SI des volets amont étant alors minimum.

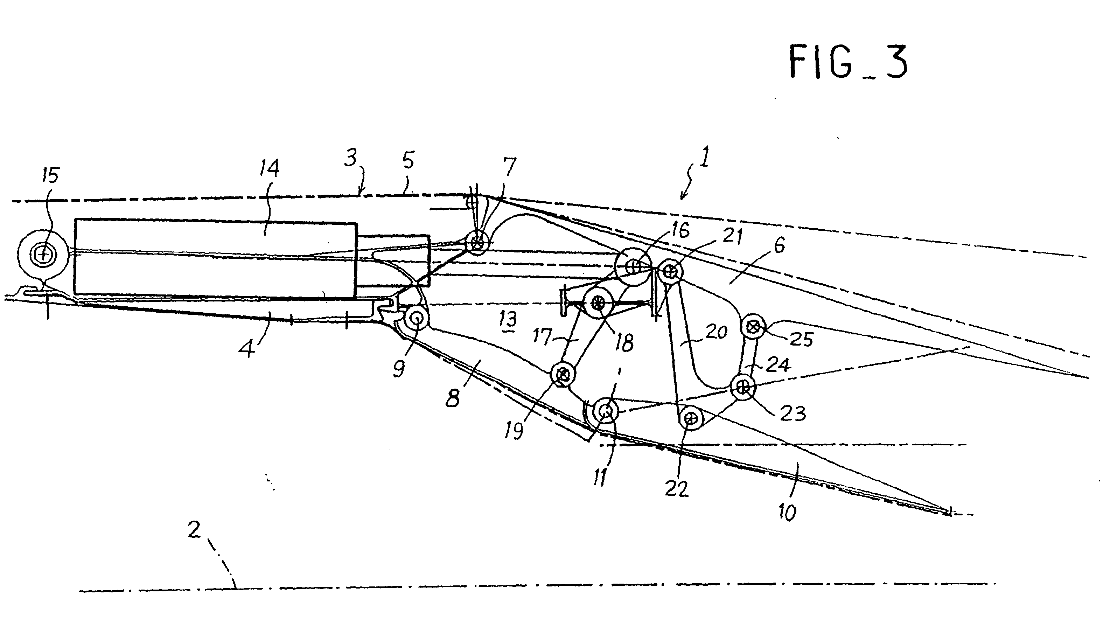

La figure 3 montre la configuration convergente-convergente de la couronne intérieure, dite "plein fermée" correspondant à l'extension maximum des tiges 15 des vérins 14, et utilisé au régime de ralenti. Dans cette configuration la section S2 de sortie des volets aval est minimum.

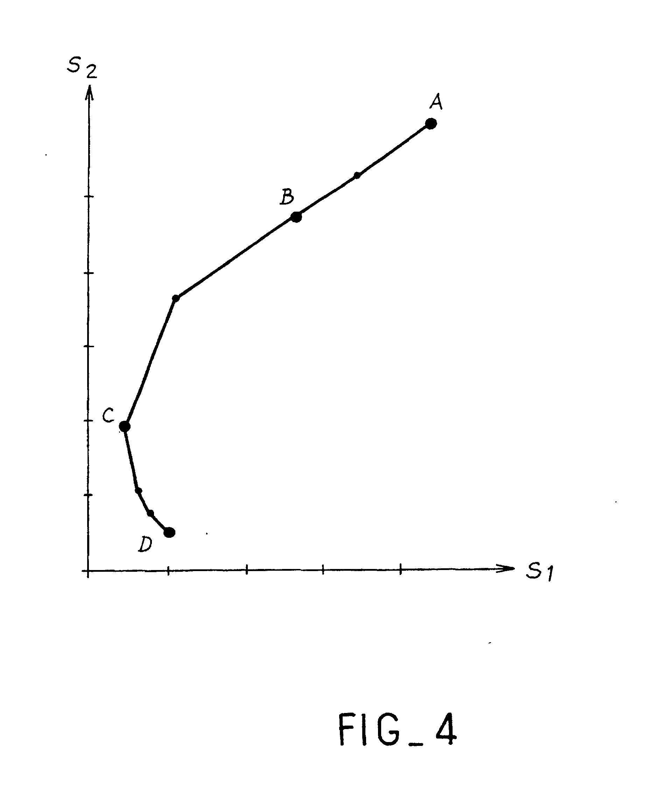

Le positionnement des différents axes d'articulation des leviers et bielles définit la loi des sections Si et S2 en fonction de la course des vérins 14. La figure 4 montre la courbe de la section S2 en fonction de la section S1. Les points A, C et D correspondent respectivement aux configurations représentées sur les figures 1 à 3. Le point B correspond à une configuration intermédiaire convergente-divergente.

De plus, pour les volets 6 de la couronne extérieure, dits "volets froids", ou impose deux valeurs extrêmes de l'angle de braquage pour satisfaire aux exigences liées à l'écoulement externe et à l'alimentation du culot pour en réduire la traînée aérodynamique.

Les mouvements de la cinématique s'effectue de la façon suivante en passant de la position tuyère pleine ouverte, représentée sur la figure 1, vers une position intermédiaire plus fermée en position convergente-divergente, représentée sur la figure 2.

Les vérins 14 passent de la position "tige escamotée" vers une position "tige sortie". Cette action entraîne le déplacement de l'anneau de commande 12 vers l'aval et la rotation simultanée des leviers translatables 17 et des leviers d'asservissement 23, dans le sens des aiguilles d'une montre. Ceci a pour effet d'entraîner les volets amont 8 vers la fermeture et les volets avals 10 vers une section de sortie plus réduite.

Si le mouvement de sortie des vérins se poursuit la couronne intérieure prend la configuration convergente-convergente représentée sur la figure 3.

L'anneau de commande 12 assure le mouvement et la synchronisation de l'ensemble des trois jeux de volets. Cette capacité permet en outre de s'affranchir d'un système de synchronisation des vérins de commande 14 par des arbres flexibles par exemple.

D'autre part, l'anneau de commande 12 est auto-centré par rapport aux volets 6, 8, 10 grâce à sa liaison avec les volets commandés aval 8 tout en évitant de soumettre ces volets à des efforts de torsion.

La figure 4 montre en perspective une portion de l'anneau de commande 12. Cet anneau 12 a une forme polygonale ayant un nombre de côtés égal au nombre de volets de chaque jeu de volet et comporte deux structures polygonales 30 et 31 décalés axialement et dont les sommets sont reliés par des entretoises axiales 32 destinées à supporter les efforts transmis par les leviers translatables 17 et les leviers d'asservissement 20. A cet effet, deux entretoises successives 32a, 32b disposées en regard du même volet commandé amont 8 présentent dans leur zone médiane des orifices alignées 33a, 33b définissant l'axe d'articulation 18 d'un levier translatable 17, et sur la face arrière de la structure 30, deux oreilles 34a, 34b présentant des orifices 35a, 35b alignés définissant l'axe d'articulation 21 d'un levier d'asservissement 20.

Grâce à cette structure polygonale de l'anneau de commande 12, les côtés des structures 30 et 31 sont soumis uniquement à des forces de traction ou de compression, et ne subissent pas d'effort de flexion.

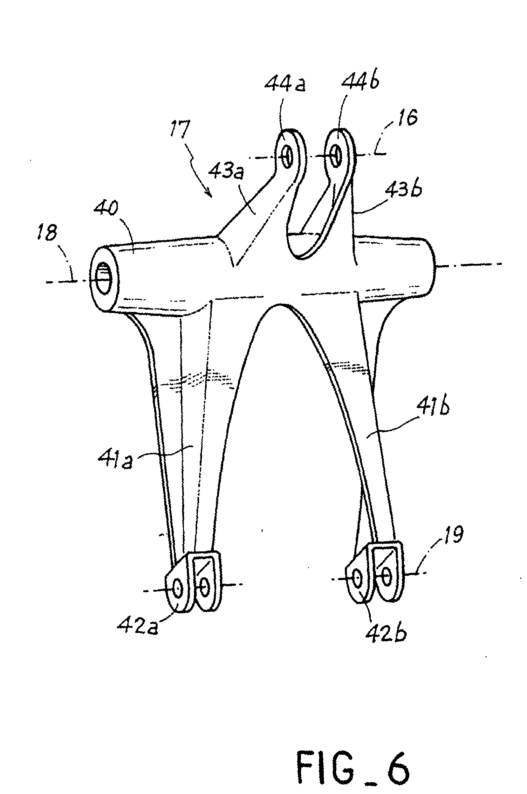

La figure 6 montre en perspective un levier translatable 17. Ce levier 17 comporte un tourbillon 40 destiné à être montré entre deux entretoises successives 32a, 32b de l'anneau de commande 12 en alignement avec les orifices 33a et 33b. Deux premiers bras 41a, 41b, solidaires du tourillon 40 comportent à leurs extrémités des étriers 42a, 42b de fixation sur des bossages du volet commandé amont correspondant, qui définissent l'axe d'articulation 19. Deux deuxièmes bras 43a, 43b, solidaires du tourillon 40 comportent à leurs extrémités des oreilles 44a, 44b percées définissant l'axe d'articulation 16 de la tête d'une tige 15 de vérin.

Grâce à cette disposition les efforts exercées par les vérins 14 sur les deuxièmes bras 43a, 43b sont inférieures aux efforts qu'il serait nécessaire d'exercer si ces vérins étaient articulés directement sur l'anneau de commande 12. D'autre part, l'anneau de commande est uniquement soumis à des efforts radiaux.

On peut donc commander la tuyère avec de plus petits vérins 14 et une plus petite pompe d'alimentation. La structure de la tuyère est plus légère et les articulations sont plus petites.

## Revendications

1. Tuyère d'éjection de turboréacteur, à géométrie variable, comportant une couronne extérieure de volets (6) et une couronne intérieure de volets, la couronne intérieure de volets comprenant deux groupes de volets dans le prolongement les uns des autres et articulés à leur jonction, les volets amont (8) de la couronne intérieure étant en outre articulés à leur extrémité antérieure sur la partie terminale fixe du turboréacteur, et les volets (6) de la couronne extérieure étant articulés à leur extrémité antérieure sur une structure radialement distante de ladite partie terminale fixe, ladite couronne extérieure et chacun desdits groupes de volets comportant une série de volets commandés et une série de volets suiveurs, dans lequel les volets commandés amont (8) sont reliés à un anneau de commande (12) mobile axialement sous l'action d'une pluralité d'organes de commande (14) interposés entre la partie fixe du turboréacteur et ledit anneau de commande (12), relié aux volets commandés aval (10) par des leviers d'asservissement (20), et la structure sur laquelle sont articulés les volets (6) de la couronne extérieure est fixe par rapport à la partie fixe du turboréacteur, grâce à quoi l'ensemble des trois jeux de volets est commandé uniquement par le déplacement axial de l'anneau de commande (12) **caractérisée par le fait que** l'anneau de commande (12) est relié aux volets commandés amont (8) par des leviers translatables (17) articulés à l'une de leurs extrémités sur les organes de commande (14), et **par le fait que** les volets commandés (6) de la couronne extérieure sont reliés aux leviers d'asservissement (20) par des biellettes (24).

2. Tuyère selon la revendication 1 **caractérisée par le fait que** l'anneau de commande (12) a une forme polygonale, les articulations des leviers translatables (17) et des leviers d'asservissement (20) sur ledit anneau de commande appuyant sur les sommets dudit anneau de commande (12).

3. Tuyère selon la revendication 2 **caractérisée par le fait que** l'anneau de commande (12) comporte deux structures polygonales (30, 31) décalées axialement et dont les sommets sont reliés par des entretoises axiales (32), les articulations des leviers translatables (17) et des leviers d'asservissement (20) sur ledit anneau de commande (12) étant portés par lesdites entretoises (32).

4. Tuyère selon la revendication 3 **caractérisée par le fait que** le nombre de côtés de l'anneau de commande (12) est égal au nombre de volets (8) amont de la couronne intérieure.

5. Tuyère selon la revendication 4 **caractérisée par le fait que** chaque levier translatable (17) comporte un tourillon (40) reliant deux entretoises successives (32a, 32b) de l'anneau de commande (12), deux premiers bras de levier (41a, 41b) solidaires dudit tourillon (40) aux extrémités desquels est articulé le volet commandé amont adjacent (8), et deux deuxièmes bras de levier (43a, 43b) solidaires du tourillon (40) aux extrémités desquels est articulé un organe de commande (14) de l'anneau de commande (12).

## Patentansprüche

1. Schubdüse für ein Turbostrahltriebwerk mit variablem Strahlquerschnitt, die einen äußeren Kranz von Klappen (6) und einen inneren Kranz von Klappen aufweist, wobei der innere Kranz von Klappen zwei Gruppen von Klappen umfaßt, die in Verlängerung zueinander angeordnet und an ihrer Verbindungsstelle gelenkig miteinander verbunden sind, wobei die stromaufwärtigen Klappen (8) des inneren Kranzes außerdem mit ihrem vorderen Ende an dem festen Endbereich des Turbostrahltriebwerks angelenkt sind und die Klappen (6) des äußeren Kranzes mit ihrem vorderen Ende an einer Struktur, die radialen Abstand von dem genannten festen Endbereich hat, angelenkt sind, wobei der äußere Kranz und jede der genannten Gruppen von Klappen eine Reihe von angetriebenen Klappen und eine Reihe von Nachlaufklappen umfaßt, wobei die stromaufwärtigen, angetriebenen Klappen (8) mit einem Antriebsring (12) verbunden sind, der unter der Einwirkung mehrerer Antriebsorgane (14) in axialer Richtung bewegbar ist, die zwischen dem festen Teil des Turbostrahltriebwerks und dem Antriebsring (12) angeordnet sind, der über Steuerhebel (20) mit den stromabwärtigen, angetriebenen Klappen (11) verbunden ist, und wobei die Struktur, an der die Klappen (6) des äußeren Kranzes angelenkt sind, relativ zu dem festen Teil des Turbostrahltriebwerks fest ist, so daß das Aggregat der drei Gruppen von Klappen ausschließlich durch die axiale Verschiebung des Antriebsrings (12) angetrieben wird,
**dadurch gekennzeichnet,**
**daß** der Antriebsring (12) mit den stromaufwärtigen, angetriebenen Klappen (8) durch verschiebbare Hebel (17) verbunden ist, die mit einem ihrer Enden an den Antriebsorganen (14) angelenkt sind,
und **daß** die angetriebenen Klappen (6) des äußeren Kranzes über Schwingarme (24) mit den Steuerhebeln (20) verbunden sind.

2. Düse nach Anspruch 1, **dadurch gekennzeichnet, daß** der Antriebsring (12) eine polygonale Form hat, wobei die Gelenkverbindungen der verschiebbaren Hebel (17) und der Steuerhebel (20) sich an den Eckpunkten des Antriebsrings (12) abstützen.

3. Düse nach Anspruch 2, **dadurch gekennzeichnet, daß** der Antriebsring (12) zwei in axialer Richtung versetzte polygonale Strukturen (30, 31) aufweist, deren Ecken durch axiale Stege (32) miteinander verbunden sind, wobei die Gelenkverbindungen der verschiebbaren Hebel (17) und der Steuerhebel (20) an dem Antriebsring (12) von den genannten Stegen (32) getragen sind.

4. Düse nach Anspruch 3, **dadurch gekennzeichnet, daß** die Zahl der Seiten des Antriebsrings (12) gleich der Zahl der stromaufwärtigen Klappen (8) des inneren Kranzes ist.

5. Düse nach Anspruch 4, **dadurch gekennzeichnet, daß** jeder verschiebbare Hebel (17) einen Lagerzapfen (40) besitzt, der zwei aufeinanderfolgende Stege (32a, 32b) des Antriebsrings (12) miteinander verbindet, ferner zwei mit dem Lagerzapfen (40) fest verbundene erste Hebelarme (41a, 41b), an deren Enden die benachbarte, stromaufwärtige gesteuerte Klappe (8) angelenkt ist, und zwei mit dem mit dem Lagerzapfen (40) fest verbundene zweite Hebelarme (43a, 43b), an deren Enden ein Antriebsorgan (14) des Antriebsrings (12) angelenkt ist,

## Claims

1. Variable geometry jet engine jet nozzle comprising an outer ring of flaps (6) and an inner ring of flaps, the inner ring of flaps comprising two groups of flaps in the continuation of one another and articulated where they meet, the upstream flaps (8) of the inner ring also being articulated at their anterior end to the fixed terminal part of the jet engine, and the flaps (6) of the outer ring being articulated at their anterior end to a structure radially distant from the said fixed terminal part, the said outer ring and each of the said groups of flaps comprising a series of controlled flaps and a series of follower flaps, in which the upstream controlled flaps (8) are connected to a control ring (12) that can be moved axially under the action of a plurality of control members (14) interposed between the fixed part of the jet engine and the said control ring (12), connected to the downstream controlled flaps (10) by slaving levers (20), and the structure on which the flaps (6) of the outer ring are articulated is fixed with respect to the fixed part of the jet engine, by virtue of which the entirety of the three sets of flaps is controlled solely by the axial movement of the control ring (12),
**characterized in that** the control ring (12) is connected to the upstream controlled flaps (8) by translatable levers (17) articulated at one of their ends to the control members (14), and **in that** the controlled flaps (6) of the outer ring are connected to the slaving levers (20) by connecting rods (24).

2. Jet nozzle according to Claim 1, **characterized in that** the control ring (12) has a polygonal shape, the articulations of the translatable levers (17) and of the slaving levers (20) to the said control ring resting against the vertices of the said control ring (12).

3. Jet nozzle according to Claim 2, **characterized in that** the control ring (12) has two polygonal structures (30, 31) that are axially offset and the vertices of which are connected by axial spacer pieces (32), the articulations of the translatable levers (17) and of the slaving levers (20) to the said control ring (12) being borne by the said spacer pieces (32).

4. Jet nozzle according to Claim 3, **characterized in that** the number of sides of the control ring (12) is equal to the number of upstream flaps (8) in the inner ring.

5. Jet nozzle according to Claim 4, **characterized in that** each translatable lever (17) comprises a journal (40) connecting two successive spacer pieces (32a, 32b) of the control ring (12), two first lever arms (41a, 41b) secured to the said journal (40) at the ends of which the adjacent upstream controlled flap (8) is articulated, and two second lever arms (43a, 43b) secured to the journal (40) to the ends of which a member (14) for controlling the control ring (12) is articulated.
